# EUROPÄISCHE PATENTSCHRIFT

(11) **EP 3 403 526 B1**
(45) Veröffentlichungstag und Bekanntmachung des Hinweises auf die Patenterteilung: **09.10.2019**
(21) Anmeldenummer: 17171059.3
(22) Anmeldetag: 15.05.2017
(51) Int. Cl.: A47B 57/26, A47B 57/56, F16B 2/12, F16B 2/18, F16B 5/12

(54) **REGAL**
SHELF
ÉTAGÈRE

(43) Veröffentlichungstag der Anmeldung: 21.11.2018
(73) Patentinhaber: Peka-Metall AG, 6295 Mosen (CH)
(72) Erfinder: Weber, Bernhard, 5712 Beinwil am See (CH); Eichenberger, Urs, 5712 Beinwil am See (CH); Meyer, Franz, 6276 Hohenrain (CH)
(74) Vertreter: BOVARD AG

(56) Entgegenhaltungen:
- EP-A1- 3 090 653
- CN-U- 205 597 617
- DE-A1- 19 952 403
- GB-A- 1 311 960
- US-A1- 2014 252 187

## Beschreibung

Die vorliegende Erfindung bezieht sich auf ein Regal, umfassend mindestens ein vertikal ausrichtbares Längsprofil, am Längsprofil in beliebiger Position anbringbare, mit Klemmmitteln ausgestaltete Haltemittel und an den Haltemitteln anbringbare Tragstrukturen, welche zum Tragen von Tablaren, Schrankelementen oder anderen Regalelementen ausgebildet sind, welche Klemmmittel Klemmbacken aufweisen, welche über Spannmittel gegeneinander spannbar sind und die Klemmbacken gegen Klemmflächen des Längsprofils pressbar sind.

Derartige Regale sind in vielfältiger Weise bekannt (z.B. US 2014/0252187 A1 und EP 3 090 653 A1). An Längsprofilen, welche beispielsweise an einer Wand befestigt werden können oder die als Raumteiler freistehend aufgestellt sind, werden Halteelemente klemmend gehalten. Auf diese Halteelemente können beispielsweise Tablare aufgesetzt werden. Die klemmende Haltung dieser Halteelemente an den Längsprofilen hat den Vorteil, dass diese Halteelemente an einer beliebigen Position im Längsprofil fixiert werden können, die Position wird nicht durch beispielsweise eine Rasterung, in welche die Halteelemente einrasten müssen, vorgegeben.

Als Klemmmittel werden oftmals Klemmlaschen eingesetzt, welche um einen entsprechenden Teil des Längsprofils gelegt werden und mittels Schrauben verspannt werden. Diese Ausgestaltung der Klemmmittel bewirkt, dass die Klemmmittel aufwändig zu spannen sind, vielfach erfüllen derartige Klemmmittel auch die Anforderungen in ästhetischer Hinsicht nicht.

Die Aufgabe der vorliegenden Erfindung besteht somit darin, ein Regal zu schaffen, bei welchen die Klemmmittel einfach aufgebaut sind, mit welchen eine grosse Klemmkraft und dadurch ein sicheres Halten der Tablare, Schrankelemente oder anderen Regalelementen erreicht werden kann und welche einfach zu bedienen sind.

Erfindungsgemäss erfolgt die Lösung dieser Aufgabe dadurch, dass die Klemmmittel aus einem ersten plattenförmigen Grundkörper und einem zweiten plattenförmigen Grundkörper gebildet sind, an deren einander abgewandten Seiten die Klemmbacken angebracht sind, welche plattenförmigen Grundkörper aufeinanderliegend angeordnet sind und über Führungsmittel geführt gegeneinander verschiebbar sind und dadurch die Klemmbacken gegen Seitenflächen des Längsprofils spannbar sind, und dass im ersten plattenförmigen Grundkörper eine Drehachse eines Exzenters drehbar gelagert ist und der Exzenterkörper in eine Ausnehmung des zweiten plattenförmigen Grundkörpers hineinragt.

Durch diese erfindungsgemässe Ausgestaltung lassen sich die Haltemittel in einfacher Weise und in jeder Position auf das Längsprofil aufsetzen, durch einfaches Verdrehen des Exzenters werden die beiden mit Klemmbacken versehenen plattenförmigen Grundkörper gegeneinander verschoben, wodurch die Klemmbacken gegen die Seitenflächen des Längsprofils gespannt werden. Über den Exzenter lassen sich hierbei grosse Spannkräfte erzeugen, wodurch ein sicheres Halten der Haltemittel am Längsprofil gewährleistet ist.

In vorteilhafter Weise sind die Klemmbacken durch Umbiegungen der einander abgewandten Seitenbereiche des ersten plattenförmigen Grundkörpers und des zweiten plattenförmigen Grundkörpers gebildet. Insbesondere wenn diese plattenförmigen Grundkörper aus einem Metall hergestellt werden, können diese Umbiegungen in einfacher Weise durch einen Abkantvorgang erreicht werden, was die Herstellung sehr vereinfacht.

In vorteilhafter Weise weist das Längsprofil eine Grundfläche, eine der Grundfläche gegenüberliegende Oberfläche und jeweils eine in die Seitenflächen eingearbeitete erste Keilfläche auf, und sind die Klemmbacken jeweils mit einer mit der ersten Keilfläche korrespondierenden zweiten Keilfläche versehen. Beim Spannen der Klemmbacken können dadurch ohne grossen Kraftaufwand zum Spannen der Spannmittel grosse Klemmkräfte erreicht werden, die Haltemittel sind somit sicher im Längsprofil fixiert. Durch das Anbringen der Keilflächen an den Seitenflächen des Längsprofils kann die sichtbare Oberfläche des Längsprofils glatt ausgebildet sein, was zu einer optisch ansprechenden ästhetischen Wirkung führt.

In vorteilhafter Weise ist das Längsprofil in der Oberfläche mit einer längsverlaufenden, nutförmigen Ausnehmung ausgestattet, welche mit einem Abdeckprofil abdeckbar ist. Diese Ausnehmung kann beispielsweise als Kabelkanal verwendet werden, welche mit dem Abdeckprofil unsichtbar gemacht werden.

Eine weitere vorteilhafte Ausgestaltung der Erfindung besteht darin, dass die Führungsmittel aus einem Stift gebildet sind, der im ersten plattenförmigen Grundkörper fixiert ist und mit einem vorstehenden Bereich durch eine schlitzförmige Ausnehmung, die im zweiten plattenförmigen Grundkörper angebracht ist, hindurchragt und mit einem Kopf versehen ist. Eine derartige Lösung kann sehr einfach und kostengünstig hergestellt werden.

In vorteilhafter Weise ist am ersten plattenförmigen Grundkörper ein Adapter befestigt ist, an welchem die Tragstrukturen zum Tragen von Tablaren, Schrankelementen oder anderen Regalelementen anbringbar sind.

In vorteilhafter Weise ist der Adapter eine Tragplatte, die mit Schraubenlöchern versehen ist, wodurch die Befestigung von unterschiedlichsten Tragstrukturen am Adapter in einfacher Weise erfolgen kann.

In vorteilhafter Weise ist auf die dem Tragprofil zugewandte Oberfläche des ersten plattenförmigen Grundkörpers eine Schutzplatte einsetzbar, wodurch die Oberfläche des Tragprofils bzw. des Abdeckprofils vor Kratzern durch die Haltemittel geschützt ist.

In vorteilhafter Weise sind auf die Haltemittel und/oder die Adapter Abdeckelemente aufsetzbar, wodurch die ästhetischen Anforderungen optimal erfüllt werden.

Insbesondere wenn ein Schrankelement mit einem Haltemittel an einem Längsprofil befestigt wird, kann es erforderlich sein, dass dieses Schrankelement, insbesondere wenn es eine grosse Länge hat, eine seitliche Neigung aufweist. Um das Schrankelement in die horizontale Lage zu bringen, ist es vorteilhaft, wenn am Schrankelement Ausrichtmittel angebracht sind, die sich auf dem Längsprofil abstützen, und mit welchen das Schrankelement in die horizontale Lage ausgerichtet werden kann.

In vorteilhafter Weise besteht dieses Ausrichtmittel aus einer Grundplatte, welche am Schrankelement befestigbar ist, welche Grundplatte mit Führungsmitteln ausgestattet ist, in welchen zwei mit Klemmbacken versehene Klemmplatten verschiebbar gehalten sind, welche Klemmplatten nach dem Klemmen am Längsprofil verschiebbar und fixierbar sind. Das Schrankelement kann somit über die Haltemittel am Längsprofil in der gewünschten Position befestigt werden, die Klemmplatten der Ausrichtmittel können ebenfalls am Längsprofil geklemmt werden, die geklemmten Klemmbacken lassen sich dann zusammen mit dem Schrankelement in der Grundplatte verschieben, bis die horizontale Lage des Schrankelementes erreicht ist, die geklemmten Klemmplatten können dann bezüglich der Grundplatte fixiert werden. Dadurch ist ein sehr einfaches Ausrichten des entsprechenden Schrankelementes gewährleistet.

In vorteilhafter Weise erfolgt die Klemmung der beiden Klemmplatten dieses Ausrichtmittels über einen Exzenter, wodurch der Klemmvorgang sehr einfach ausgeführt werden kann.

Ausführungsformen der Erfindung werden nachfolgend an Hand der beiliegenden Zeichnung beispielhaft näher erläutert.

Es zeigt
Figur 1a eine Seitenansicht auf ein Regal mit Längsprofil und darin eingesetztem Tablar und Schrankelement;
Figur 1b eine Ansicht von hinten auf das Längsprofil mit eingesetztem Schrankelement;
Figur 2 eine räumliche Darstellung eines Längsprofilabschnittes mit eingesetzten Haltemitteln;
Figur 3 in räumlicher Darstellung ein Längsprofilabschnitt mit den Haltemitteln gemäss Figur 2 in auseinander gezogenem Zustand;
Figur 4 eine Ansicht von vorne auf die in das Längsprofil eingesetzten Haltemittel;
Figur 5 eine Schnittdarstellung entlang Linie V-V durch das Haltemittel gemäss Figur 4;
Figur 6a in räumlicher Darstellung ein auf die Haltemittel aufgesetztes Tablar mit abgedecktem Adapter;
Figur 6b in räumlicher Darstellung das auf die Haltemittel aufgesetzte Tablar gemäss Figur 6, wobei die Abdeckungen abgezogen sind;
Figur 7 in räumlicher Darstellung eine andere Tablarart, die auf die Haltemittel aufgesetzt ist;
Figur 8a und 8b jeweils eine Ansicht auf ein Schrankelement, das über Haltemittel im Längsprofil gehalten ist;
Figur 9 eine räumliche Darstellung der Ausrichtmittel, die an einem Schrankelement befestigt werden können, in auseinander gezogenen Zustand; und
Figur 10 in räumlicher und vergrösserter Darstellung eine Ansicht von hinten auf das Schrankelement mit Haltemittel und Ausrichtmittel.

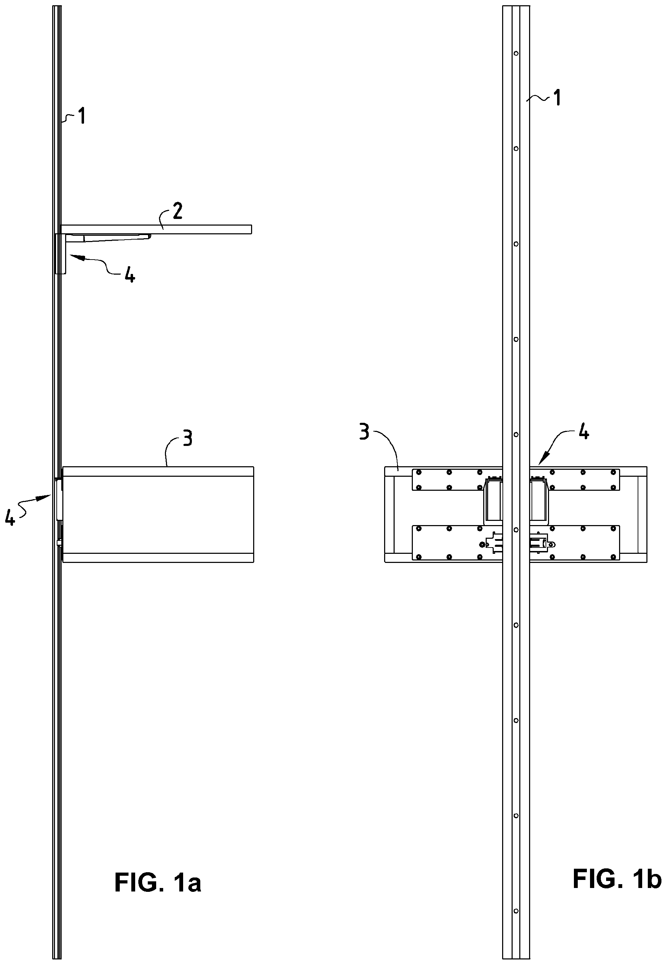

Aus den Figuren 1a und 1b ist jeweils ein Längsprofil 1 ersichtlich, in welches, wie nachfolgend noch beschrieben wird, Haltemittel 4 eingesetzt werden können, die dazu dienen, Tablare 2 und Schrankelemente 3 und dergleichen am Längsprofil 1 zu halten. Längsprofile 1 dieser Art können beispielsweise an Wänden befestigt werden, sie können aber auch beispielsweise als Raumteiler eingesetzt werden, wozu aber die Profilstärke des Längsprofils 1 vergrössert werden müsste. Hierbei können mehrere Längsprofile 1 nebeneinander an der Wand befestigt werden, in welche die Tablare 2 oder weitere Schrankelemente 3 oder andere Regalelemente, die unterschiedliche Funktion ausüben können, eingesetzt werden. Dadurch können Regal in beliebiger Form errichtet werden, die die gewünschten Anforderungen erfüllen können. Üblicherweise werden die Tablare 2 oder die Schrankelement 3 jeweils in einem einzigen Längsprofil 1 gehalten.

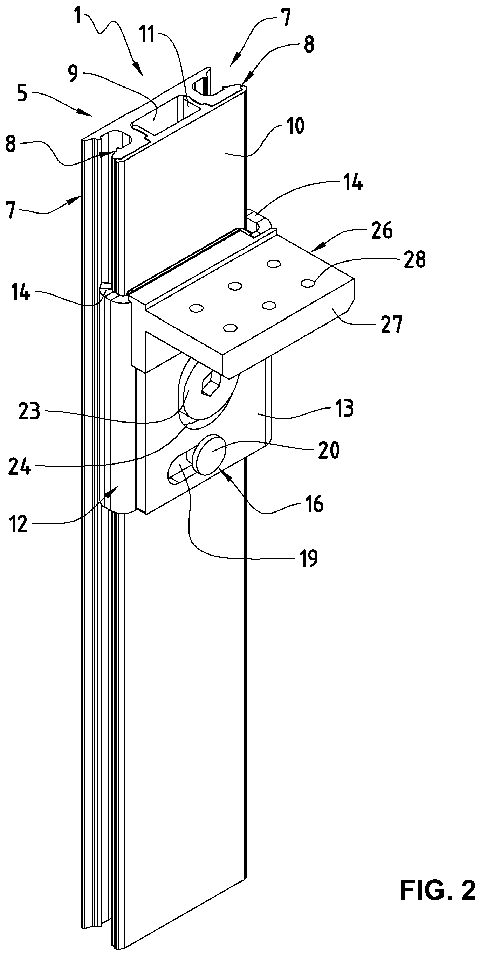

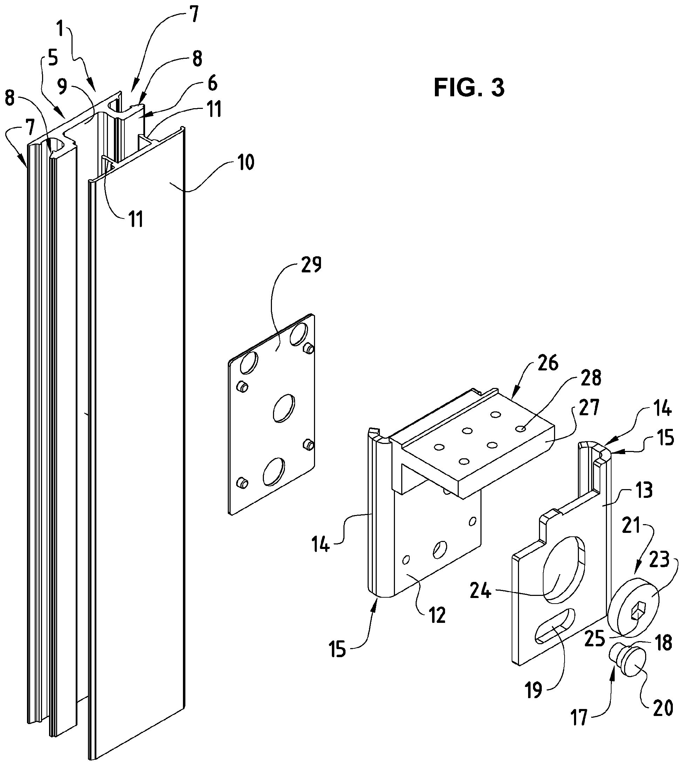

Aus den Figuren 2 und 3 ist ein Teil eines Längsprofils 1 ersichtlich. Dieses Längsprofil 1, das beispielsweise aus einem geeigneten Metall, insbesondere Aluminium, gebildet sein kann, weist eine ebene Grundfläche 5 und eine der Grundfläche 5 gegenüberliegende Oberfläche 6 sowie zwei Seitenflächen 7 auf. In jede der beiden Seitenflächen 7 ist eine erste Keilfläche 8 eingearbeitet. In der Oberfläche 6 des Längsprofil 1 ist eine längsverlaufende nutförmige Ausnehmung 9 eingearbeitet. In dieser längs des Längsprofils 1 verlaufenden nutförmigen Ausnehmung 9 können beispielsweise in bekannter, nicht dargestellter Weise Kabel eingelegt werden. Als Kabelkanäle können auch die in den Seitenflächen 7 durch die Einarbeitung der ersten Keilflächen 8 entstandenen Rillen verwendet werden. Im Grund dieser Ausnehmung 9 können in bekannter Weise durchgehende Bohrungen angebracht werden, mittels Schrauben kann das Längsprofil 1 an einer Wand oder dergleichen in vertikaler Ausrichtung befestigt werden.

Die Ausnehmung 9 des Längsprofil 1 kann mit einem Abdeckprofil 10 abgedeckt werden. Dieses Abdeckprofil 10 überdeckt die ganze Oberfläche 6 des Längsprofil 1, zudem ist dieses Abdeckprofil 10 mit Haltestegen 9 ausgestattet, über welche dieses Abdeckprofil 10 in die Ausnehmung 9 eingeklinkt werden kann.

Die Haltemittel 4 sind aus einem ersten plattenförmigen Grundkörper 12 und einem zweiten plattenförmigen Grundkörper 13 gebildet. An deren einander abgewandten Seiten sind an diesen plattenförmigen Grundkörpern 12 und 13 jeweils Klemmbacken 14 angebracht. Der erste Grundkörper 12 und der zweite Grundkörper 13 sind vorzugsweise aus einem Metall gefertigt, die Klemmbacken 14 können somit in einfacher Weise durch Umbiegungen 15 der einander abgewandten Seitenbereiche erhalten werden. Der erste plattenförmige Grundkörper 12 und der zweite plattenförmige Grundkörper 13 sind aufeinander liegend angeordnet und gegeneinander verschiebbar. Diese Verschiebbarkeit wird über Führungsmittel 16 geführt, diese Führungsmittel 16 bestehen im hier dargestellten Ausführungsbeispiel aus einem Stift 17, der im ersten plattenförmigen Grundkörper 12 fixiert ist und mit einem vorstehenden Bereich 18 durch eine schlitzförmige Ausnehmung 19, die im zweiten plattenförmigen Grundkörper 13 angebracht ist, hindurchragt und mit einem Kopf 20 versehen ist. Über diese Führungsmittel 16 lassen sich der erste plattenförmige Grundkörper 12 und der zweiten plattenförmige Grundkörper 13 quer zueinander verschieben.

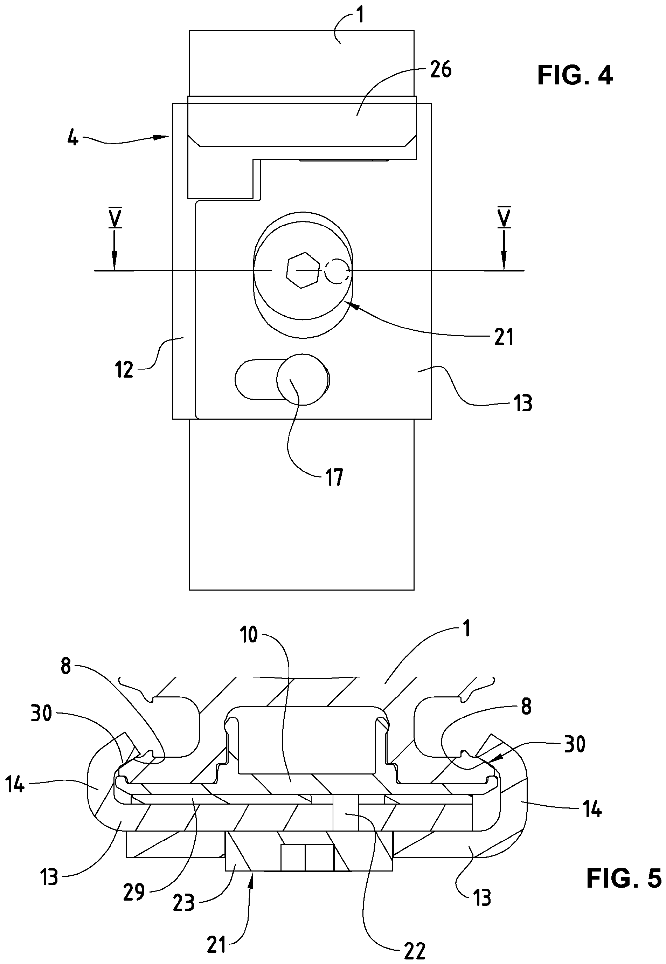

Die Verschiebung des ersten Grundkörpers 12 und des zweiten Grundkörpers 13 erfolgt über einen Exzenter 21, dessen Drehachse 22 (Figur 5) im ersten plattenförmigen Grundkörper 2 drehbar gelagert ist, während der Exzenterkörper 23 in eine Ausnehmung 24 des zweiten plattenförmigen Grundkörpers 13 hineinragt. Im Exzenterkörper 23 ist eine Werkzeugaufnahme 25 angebracht, welche im hier dargestellten Ausführungsbeispiel als Sechskantöffnung ausgebildet ist, in diese Werkzeugaufnahme 25 kann ein geeignetes Werkzeug eingesteckt werden, der Exzenter 21 lässt sich dadurch in einfacher Weise verdrehen, wodurch die beiden plattenförmigen Grundkörper 12 und 13 gegeneinander verschoben werden können.

Am ersten plattenförmigen Grundkörper 12 ist ein Adapter 26 befestigt, an welchem, wie später noch beschrieben wird, Tragstrukturen zum Tragen von Tablaren, Schrankelementen oder anderen Regalelementen befestigt werden können. Im hier dargestellten Ausführungsbeispiel besteht dieser Adapter 26 aus einer Tragplatte 27, die mit Schraubenlöchern 28 ausgestattet ist.

Auf die dem Längsprofil 1 zugewandte Oberfläche des ersten plattenförmigen Grundkörpers 12 ist eine Schutzplatte 29 einsetzbar, die beispielsweise aus einem Kunststoff gebildet ist, wodurch die Oberfläche der Längsprofils 1 bzw. die Oberfläche des Abdeckprofils 10 vor Verkratzungen durch den ersten plattenförmigen Grundkörper 12 geschützt wird.

Aus den Figuren 4 und 5 ist das Haltemittel 4 ersichtlich, das auf das Längsprofil 1 aufgesetzt und verspannt ist. Zum Aufsetzen des Haltemittels 4 auf das Längsprofil 1 wird der Exzenter 21 so verdreht, dass der erste Grundkörper 12 und der zweite Grundkörper 13 in der auseinander gefahrenen Position sich befinden. Das Haltemittel 4 kann dann von vorne auf das Längsprofil 1 aufgesetzt und in die richtige Position gebracht werden. Danach wird der Exzenter 21 so verdreht, dass der erste Grundkörper 12 und der zweite Grundkörper 13 gegeneinander fahren. Die Klemmbacken 14 des ersten Grundkörpers 12 und des zweiten Grundkörpers 13 gelangen mit ihren zweiten Keilflächen 30 auf die ersten Keilflächen 8 des Längsprofils 1. Durch die Neigung dieser Keilflächen 8 und 30, die einen Keilwinkel von etwa 20 Grad bis 30 Grad aufweisen, erfolgt eine optimale Verklemmung, das Haltemittel 4 wird zusätzlich gegen die Oberfläche des Längsprofils 1 gepresst. Durch diese Verspannung der beiden Klemmbacken 14 sind die Haltemittel 4 in optimaler Weise am Längsprofil 1 gehalten. In diesem Zustand können auf die Adapter 26 der Haltemittel 4 die entsprechenden Tablare, Schrankelemente oder andere Regalelemente ausgesetzt werden.

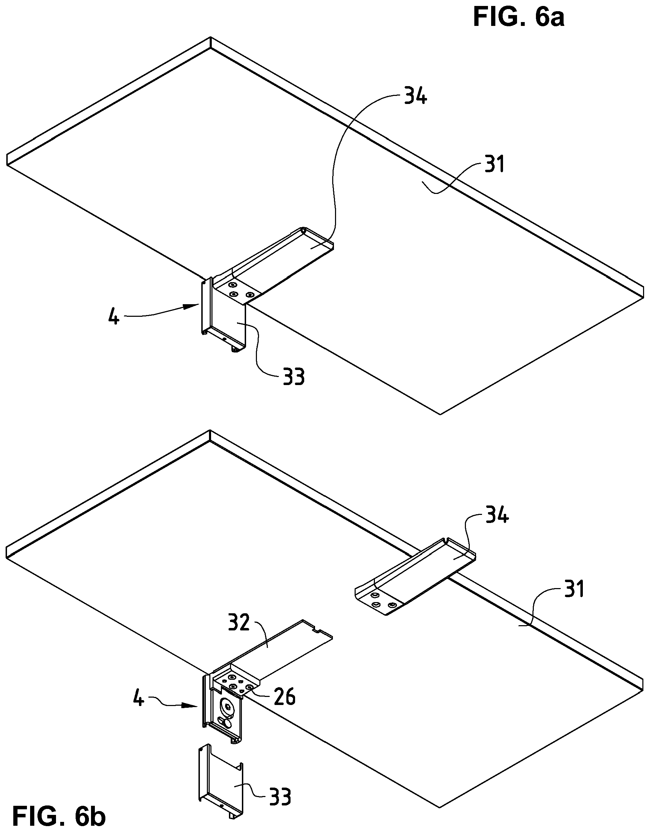

Aus den Figuren 6a und 6b ist ersichtlich, wie auf die Haltemittel 4 bzw. dessen Adapter 26 ein Tablar 31 aufgesetzt werden kann. Dieses Tablar 31 ist mit einer daran befestigten Verstärkungsplatte 32 versehen, über diese Verstärkungsplatte 32 wird das Tablar 31 auf den Adapter 26 des Haltemittels aufgeschraubt. Auf das Haltemittel 4 lässt sich ein erstes Abdeckelement 33 aufstecken, auf die Verstärkungsplatte 32 und den Adapter 26 lässt sich ein zweites Abdeckelement 34 aufstecken, diese beiden Abdeckelemente 33 und 34 können beispielsweise aus Kunststoff gefertigt sein.

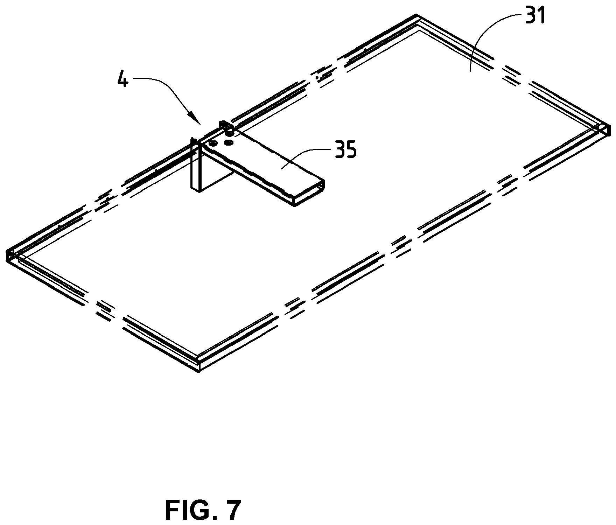

Figur 7 zeigt ebenfalls ein Tablar 31, das beispielsweise aus Blech gefertigt ist. In den inneren Hohlraum dieses Tablars 31 kann ein rohrförmiges Element 35 eingesetzt werden, welches auf den Adapter des Haltemittels 4 aufgesteckt und mittels Schrauben fixiert werden kann.

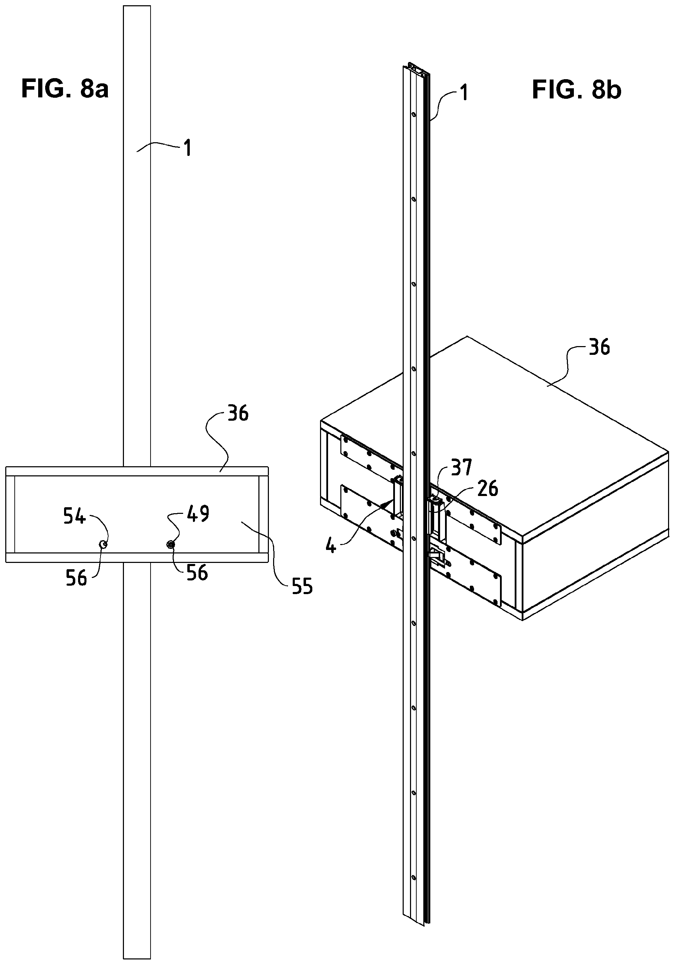

Aus den Figuren 8a und 8b ist wiederum ein Längsprofil 1 ersichtlich, in welches über die Haltemittel 4 ein Schrankelement 36 eingesetzt ist. Der Adapter 26 dieses Haltemittels 4 ist so ausgestaltet, dass das Schrankelement 36 über bekannte Einhängemittel 37 in den Adapter 26 eingehängt und dadurch im Haltemittel 4 gehalten werden kann. Am Schrankelement 36 sind unterhalb der Einhängemittel 37 und somit unterhalb der Haltemittel 4 Ausrichtmittel 38 angebracht. Über diese Ausrichtmittel 38 lässt sich das Schrankelement 36 gegenüber dem Längsprofil 1 ausrichten, sodass seitliche Neigungen des Schrankelementes 36 ausgeglichen werden können, wie nachfolgend noch beschrieben wird.

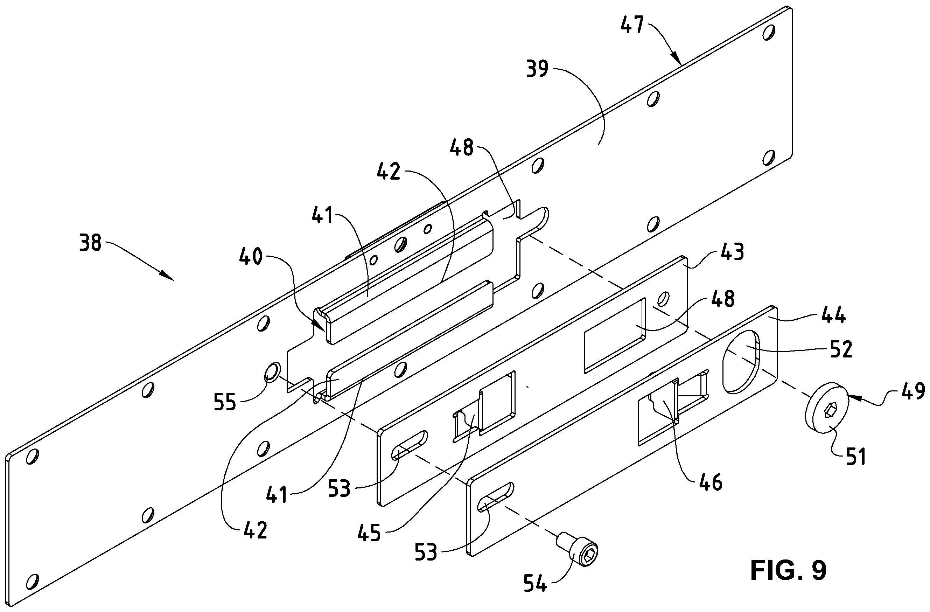

Wie aus Figur 9 ersichtlich ist, bestehen diese Ausrichtmittel 38 aus einer Grundplatte 39, die mit Führungsmitteln 40 ausgestattet ist. Diese Führungsmittel 40 sind durch zwei Ausbiegungen 41 gebildet, die in der Grundplatte 39 angebracht sind, und durch welche Führungsschienen 42 gebildet werden. In diese Führungsschienen 42 eingeschoben sind zwei übereinanderliegende Klemmplatten 43 und 44, die dadurch gegeneinander und bezüglich der Grundplatte 39 verschiebbar gehalten sind. Die untenliegenden Klemmplatte 43 ist mit einer Klemmbacke 45 ausgestattet, die in der hier dargestellten Klemmplatte 43 linksseitig angeordnet ist, die oben liegende Klemmplatte 44 ist ebenfalls mit einer Klemmbacke 46 ausgestattet, die in dieser Figur auf der rechten Seite der Klemmplatte 44 angebracht ist. Diese beiden Klemmbacken 45 und 46 ragen im zusammengebauten Zustand dieser Ausrichtmittel 38 über die Oberfläche 47 der Grundplatte 39 hinaus, wozu in den entsprechenden Platten jeweils Ausnehmungen 48 angebracht sind.

Die gegenseitige Verschiebung der beiden Klemmplatten 43 und 44 erfolgt über einen Exzenter 49, der in einer Bohrung 50 in der Klemmplatte 43 drehbar gehalten ist, während der Exzenterkörper 51 in eine Ausnehmung 52 der Klemmplatte 44 zu liegen kommt. Durch Verdrehen dieses Exzenters 49 lassen sich die Klemmplatten 43 und 44 gegeneinander verschieben, die Klemmbacken 45 und 46 können somit gegeneinander und voneinander weg verfahren werden.

Die beiden Klemmplatten 43 und 44 weisen jeweils eine schlitzförmige Ausnehmung 53 auf, durch welche eine Schraube 54 geführt ist, welche in eine mit einem Gewinde versehene Bohrung 55 in der Grundplatte 39 einschraubbar ist. Durch Anziehen dieser Schraube 54 werden die beiden Klemmplatten 43 und 44 auf der Grundplatte 39 fixiert.

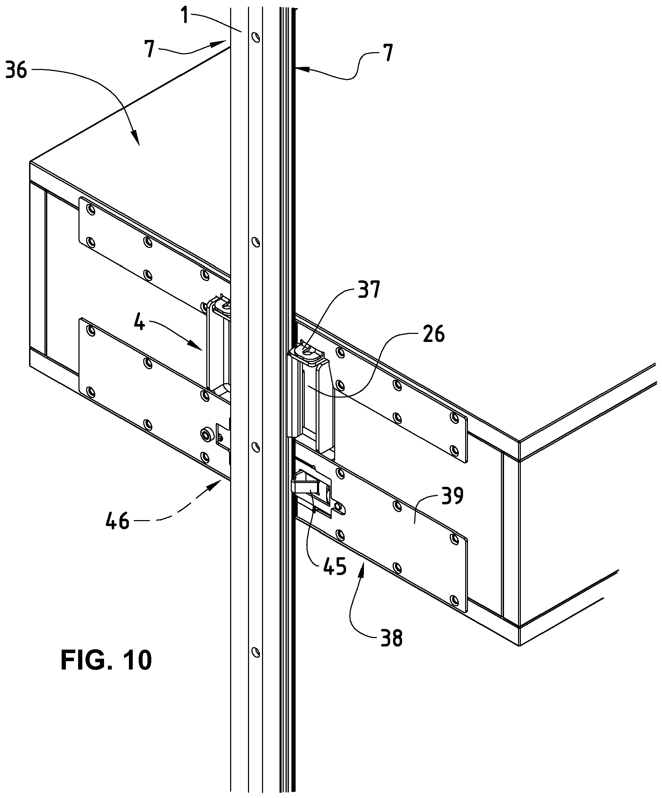

Wie aus Figur 10 ersichtlich ist, werden diese Ausrichtmittel 38 auf der Rückseite des Schrankelementes 36 befestigt. Zum Anbringen dieses Schrankelementes 36 am Längsprofil 1 wird das Schrankelement 36 mit den Einhängemitteln 37 auf den Adapter 26 der Haltemittel 4, die am Längsprofil 1 befestigt sind, eingesetzt. Hierzu befinden sich die Klemmbacken 45 und 46 in der auseinander gefahrenen Position. Im einhängten Zustand des Schrankelementes 36 befinden sich somit die beiden Klemmplatten 45 und 46 beidseits der Seitenflächen 7 des Längsprofils 1. Durch Verdrehen des Exzenters 49 können die beiden Klemmbacken 45 und 46 gegen die Seitenflächen 7 des Längsprofils 1 verschoben werden und in die klemmende Position gebracht werden. Die Schraube 54 befindet sich in der gelösten Position, das Schrankelement 36 kann somit bezüglich des Längsprofils 1 in der Neigung verstellt werden, während die Klemmbacken 45 und 46 sich in der klemmenden Position mit dem Längsprofil 1 befinden. Wenn die gewünschte insbesondere horizontale Lage des Schrankelements 36 erreicht ist, kann die Schraube 54 angezogen werden, die beiden Klemmplatten 43 und 44 und somit die Klemmbacken 45 und 46 werden bezüglich der Grundplatte 39 und somit bezüglich der Schrankelementes 36 fixiert, das Schrankelement 36 befindet sich in der fixierten ausgerichteten Lage.

Um einen Zugang zur Bedienung des Exzenters 49 und der Schraube 54 zu ermöglichen, sind, wie aus Figur 8a ersichtlich ist, in der Rückwand 55 des Schrankelementes 36 im Bereich des Exzenters 51 und der Schrauben 54 jeweils zwei Bohrungen 56 angebracht, durch welche der Exzenter 51 bzw. die Schrauben 54 über jeweils ein geeignetes Werkzeug verdrehbar sind.

Die am Schrankelement 36 anbringbaren Ausrichtmittel 38 sind beim vorgängig beschriebenen Ausführungsprofil im Zusammenhang mit einem Längsprofil 1 beschrieben worden, das entsprechend für die dargestellten Haltemittel 4 ausgestattet ist, diese Ausrichtmittel 38 können selbstverständlich aber auch für jegliche andere Längsprofile eingesetzt werden, die zur Klemmung geeignete Seitenflächen aufweisen, und bei welchen andere Ausführungsarten von Haltemitteln eingesetzt werden können, abgestimmt auf das Längsprofil. Die Haltemittel können geklemmt, geschraubt, eingehängt oder in irgendeiner anderen Weise mit dem Längsprofil verbunden sein.

Mit dieser erfindungsgemässen Lösung wird ein Regal erhalten, das sehr einfach im Aufbau ist, bei welchen die Haltemittel in einfachster Weise und mit optimaler Fixierung am Längsprofil angebracht werden können, die Haltemittel sind so ausgebildet, dass praktisch beliebige Tablare, Schrankelemente oder andere Regalelemente eingesetzt werden können, wobei die Einsetzung dieser Elemente in sehr einfacher Weise erfolgen kann.

## Patentansprüche

1. Regal, umfassend mindestens ein vertikal ausrichtbares Längsprofil (1), am Längsprofil (1) in beliebiger Position anbringbare, mit Klemmmitteln ausgestaltete Haltemittel (4) und an den Haltemitteln (4) anbringbare Tragstrukturen, welche zum Tragen von Tablaren (2), Schrankelementen (3) oder anderen Regalelementen ausgebildet sind, welche Klemmmittel Klemmbacken (14) aufweisen, welche über Spannmittel gegeneinander spannbar sind und die Klemmbacken (14) gegen Klemmflächen des Längsprofils (1) pressbar sind, **dadurch gekennzeichnet, dass** die Klemmmittel aus einem ersten plattenförmigen Grundkörper (12) und einem zweiten plattenförmigen Grundkörper (13) gebildet sind, an deren einander abgewandten Seiten die Klemmbacken (14) angebracht sind, welche plattenförmigen Grundkörper (12, 13) aufeinanderliegend angeordnet sind und über Führungsmittel (16) geführt gegeneinander verschiebbar sind und dadurch die Klemmbacken (14) gegen Seitenflächen (7) des Längsprofils (1) spannbar sind, und dass im ersten plattenförmigen Grundkörper (12) eine Drehachse (22) eines Exzenters (21) drehbar gelagert ist und der Exzenterkörper (23) in eine Ausnehmung (24) des zweiten plattenförmigen Grundkörpers (13) hineinragt.

2. Regal nach Anspruch 1, **dadurch gekennzeichnet, dass** die Klemmbacken (14) durch Umbiegungen (15) der einander abgewandten Seitenbereiche des ersten plattenförmigen Grundkörpers (12) und des zweiten plattenförmigen Grundkörpers (13) gebildet sind.

3. Regal nach Anspruch 1 oder 2, **dadurch gekennzeichnet, dass** das Längsprofil (1) eine Grundfläche (5), eine der Grundfläche (5) gegenüberliegende Oberfläche (6) und jeweils eine in die Seitenflächen (7) eingearbeitete erste Keilfläche (8) aufweist und dass die Klemmbacken (14) jeweils mit einer mit der ersten Keilfläche (8) korrespondierenden zweiten Keilfläche (30) versehen sind.

4. Regal nach Anspruch 3, **dadurch gekennzeichnet, dass** das Längsprofil (1) in der Oberfläche (6) mit einer längsverlaufenden, nutförmigen Ausnehmung (9) ausgestattet ist und dass die nutförmige Ausnehmung (9) mit einem Abdeckprofil (10) abdeckbar ist.

5. Regal nach einem der Ansprüche 1 bis 4, **dadurch gekennzeichnet, dass** die Führungsmittel (16) aus einem Stift (17) gebildet sind, der im ersten plattenförmigen Grundkörper (12) fixiert ist und mit einem vorstehenden Bereich (18) durch eine schlitzförmige Ausnehmung (19), die im zweiten plattenförmigen Grundkörper (13) angebracht ist, hindurchragt und mit einem Kopf (20) versehen ist.

6. Regal nach einem der Ansprüche 1 bis 5, **dadurch gekennzeichnet, dass** am ersten plattenförmigen Grundkörper (12) ein Adapter (26) befestigt ist, an welchem die Tragstrukturen zum Tragen von Tablaren (2), Schrankelementen (3) oder anderen Regalelementen anbringbar sind.

7. Regal nach Anspruch 6, **dadurch gekennzeichnet, dass** der Adapter (26) eine Tragplatte (27) mit Schraubenlöchern (28) aufweist.

8. Regal nach einem der Ansprüche 1 bis 7, **dadurch gekennzeichnet, dass** auf die dem Längsprofil (1) zugewandte Oberfläche des ersten plattenförmigen Grundkörpers (12) eine Schutzplatte (29) einsetzbar ist.

9. Regal nach einem der Ansprüche 1 bis 8, **dadurch gekennzeichnet, dass** auf die Haltemittel (4) und/oder die Adapter (26) Abdeckelemente (33, 34) aufsetzbar sind.

10. Regal insbesondere nach Anspruch 1, **dadurch gekennzeichnet, dass** ein in das Längsprofil (1) einsetzbares Schrankelement (36) mit Haltemitteln (4) im Längsprofil (1) gehalten ist und dass am Schrankelement (36) Ausrichtmittel (38) angebracht sind.

11. Regal nach Anspruch 10, **dadurch gekennzeichnet, dass** die Ausrichtmittel (38) aus einer Grundplatte (39) bestehen, welche am Schrankelement (36) befestigbar ist, welche Grundplatte (39) mit Führungsmitteln (40) ausgestattet ist, in welchen zwei mit Klemmbacken (45; 46) versehene Klemmplatten (43; 44) verschiebbar gehalten sind, welche Klemmplatten (43, 44) nach dem Klemmen am Längsprofil (1) verschiebbar und fixierbar sind.

12. Regal nach Anspruch 11 **dadurch gekennzeichnet, dass** die Klemmung über einen Exzenter (51) erfolgt.

## Claims

1. Shelf, comprising at least one vertically alignable longitudinal section (1), holding means (4) attachable on the longitudinal section (1) in any desired position and provided with clamping means, and, attachable on the holding means (4), bearing structures which are designed to bear shelf boards (2), cabinet elements (3) or other shelf elements, which clamping means have clamping jaws (14), which are able to be tensioned with respect to one another via tensioning means, and the clamping jaws (14) are pressable against clamping surfaces of the longitudinal section (1), **characterized in that** the clamping means are composed of a first plate-shaped basic body (12) and a second plate-shaped basic body (13), on whose sides remote from one another the clamping jaws (14) are installed, which plate-shaped basic bodies (12, 13) are disposed lying on top of one another and are displaceable toward one another in a guided way via guide means (16), and the clamping jaws (14) are thereby able to be tensioned against lateral surfaces (7) of the longitudinal section (1), and **in that** borne in a rotatable way in the first plate-shaped basic body (12) is a rotational shaft or axis (22) of an eccentric (21), and the eccentric body (23) projects into a recess (24) of the second plate-shaped basic body (13).

2. Shelf according to claim 1, **characterized in that** the clamping jaws (14) are formed by bends (15) of the lateral regions remote from one another of the first plate-shaped basic body (12) and of the second plate-shaped basic body (13).

3. Shelf according to claim 1 or 2, **characterized in that** the longitudinal section (1) has a base area (5), a surface area (6) opposite the base area (5), and one first wedge surface (8) each, worked into the lateral surfaces (7), and **in that** the clamping jaws (14) are each provided with a second wedge surface (30) corresponding to the first wedge surface (8).

4. Shelf according to claim 3, **characterized in that** the longitudinal section (1) is provided, in the surface area (6), with a longitudinally running, groove-shaped recess (9), and **in that** the groove-shaped recess (9) is able to be covered by a cover section (10).

5. Shelf according to one of the claims 1 to 4, **characterized in that** the guide means (16) are composed of a pin (17), which is fixed in the first plate-shaped basic body (12), and which projects by a protruding region (18) through a slot-shaped recess (19), which is provided in the second plate-shaped basic body (13), and is provided with a head (20).

6. Shelf according to one of the claims 1 to 5, **characterized in that** fixed to the first plate-shaped basic body (12) is an adapter (26), to which are attachable the bearing structures for bearing shelf boards (2), cabinet elements (3) or other shelf elements.

7. Shelf according to claim 6, **characterized in that** the adapter (26) has a supporting plate (27) with screw holes (28).

8. Shelf according to one of the claims 1 to 7, **characterized in that** insertable on the surface area of the first plate-shaped basic body (12) turned toward the longitudinal section (1) is a protective plate (29).

9. Shelf according to one of the claims 1 to 8, **characterized in that** cover elements (33, 34) are placeable on the holding means (4) and/or the adapter (26).

10. Shelf in particular according to claim 1, **characterized in that** a cabinet element (36) insertable in the longitudinal section (1) is held in the longitudinal section (1) by holding means (4) and **in that** installed on the cabinet element (36) are alignment means (38).

11. Shelf according to claim 10, **characterized in that** the alignment means (38) consist of a base plate (39), which is fixable on the cabinet element (36), which base plate (39) is provided with guide means (40), in which two clamping plates (43; 44), provided with clamping jaws (45; 46), are held in a displaceable way, which clamping plates (43, 44), after the clamping on the longitudinal section (1), are slidable and fixable.

12. Shelf according to claim 11, **characterized in that** the clamping takes place via an eccentric (51).

## Revendications

1. Etagère, comprenant au moins une section longitudinale (1) qui peut être alignée verticalement, des moyens de maintien (4) pouvant être fixés sur la section longitudinale (1) dans n'importe quelle position, et qui sont équipés de moyens de serrage, et, pouvant être fixées sur les moyens de maintien (4), des structures portantes qui sont conçues pour supporter des tablettes d'étagère (2), des éléments d'armoire (3) ou d'autres éléments d'étagères, les moyens de serrage possédant des mâchoires de serrage (14), qui peuvent être mises sous tension l'une vis-à-vis de l'autre à l'aide de moyens de tension, et les mâchoires de serrage (14) pouvant être comprimées contre des surfaces de serrage de la section longitudinale (1), **caractérisée en ce que** les moyens de serrage sont formés d'un premier corps de base en forme de plaque (12) et d'un deuxième corps de base en forme de plaque (13), sur les côtés opposés desquels les mâchoires de serrage (14) sont installées, les corps de base en forme de plaque (12, 13) étant disposés de façon superposée l'un au-dessus de l'autre, et pouvant être déplacés l'un vers l'autre de manière guidée via des moyens de guidage (16), et les mâchoires de serrage (14) pouvant par conséquent être mises sous tension contre des surfaces latérales (7) de la section longitudinale (1), et **en ce qu'**un axe de rotation (22) d'un excentrique (21) est monté rotatif dans le premier corps de base en forme de plaque (12), et le corps de l'excentrique (23) pénètre à l'intérieur d'un renfoncement (24) du deuxième corps de base en forme de plaque (13).

2. Etagère selon la revendication 1, **caractérisée en ce que** les mâchoires de serrage (14) sont formées par des courbures (15) au niveau des zones latérales opposées du premier corps de base en forme de plaque (12) et du deuxième corps de base en forme de plaque (13).

3. Etagère selon la revendication 1 ou 2, **caractérisée en ce que** la section longitudinale (1) possède une surface de base (5), une surface supérieure (6) opposée à la surface de base (5), et respectivement, insérée dans les surfaces latérales (7), une première surface cunéiforme (8), et **en ce que** les mâchoires de serrage (14) sont chacune munies d'une deuxième surface cunéiforme (30) correspondant à la première surface cunéiforme (8).

4. Etagère selon la revendication 3, **caractérisée en ce que** la section longitudinale (1) est munie, au niveau de la surface supérieure(6), d'un renfoncement sous forme de rainure s'étendant longitudinalement (9), et **en ce que** le renfoncement sous forme de rainure (9) peut être couvert par une section de couverture (10).

5. Etagère selon l'une des revendications 1 à 4, **caractérisée en ce que** les moyens de guidage (16) sont formés par une goupille (17), qui est fixée dans le premier corps de base en forme de plaque (12), et qui, via une partie saillante (18), passe à travers une ouverture en forme de fente (19) aménagée dans le deuxième corps de base en forme de plaque (13), et est équipée d'une tête (20).

6. Etagère selon la revendication 1 à 5, **caractérisée en ce qu'**un adaptateur (26) est fixé au premier corps de base en forme de plaque (12), et auquel les structures portantes pour supporter des tablettes d'étagère (2), les éléments d'armoire (3) ou d'autres éléments d'étagères peuvent être fixés.

7. Etagère selon la revendication 6, **caractérisée en ce que** l'adaptateur (26) possède une plaque de support (27) pourvue de trous taraudés (28).

8. Etagère selon l'une des revendications 1 à 7, **caractérisée en ce qu'**une plaque de protection (29) peut être insérée au niveau de la surface supérieure du premier corps de base en forme de plaque (12) faisant face à la section longitudinale (1).

9. Etagère selon l'une des revendications 1 à 8, **caractérisée en ce que** des couvercles (33, 34) peuvent être placés sur les moyens de maintien (4) et/ou l'adaptateur (26).

10. Etagère en particulier selon la revendication 1, **caractérisée en ce qu'**un élément d'armoire (36) pouvant être inséré dans la section longitudinale (1) est maintenu dans la section longitudinale (1) par des moyens de maintien (4), et **en ce que** des moyens d'alignement (38) sont installés sur l'élément d'armoire (36).

11. Etagère selon la revendication 10, **caractérisée en ce que** les moyens d'alignement (38) consistent en une plaque de base (39), qui peut être fixée sur l'élément d'armoire (36), la plaque de base (39) étant munie de moyens de guidage (40), dans laquelle deux plaques de serrage (43, 44) pourvues de mâchoires de serrage (45, 46), sont maintenues de façon coulissante, lesquelles plaques de serrage (43, 44), après le serrage sur la section longitudinale (1), peuvent être déplacées et fixées.

12. Etagère selon la revendication 11, **caractérisée en ce que** le serrage est effectué via un excentrique (51).
